Europäisches Patentamt

(19) European Patent Office

Office européen des brevets

(11) Publication number: **0 458 757 A2**

## (12) EUROPEAN PATENT APPLICATION

(21) Application number: 91830179.7

(22) Date of filing: 03.05.91

(51) Int. Cl.⁵: **B60N 2/00**, A47C 31/10

(30) Priority: 22.05.90 IT 2122890 U

(43) Date of publication of application:
27.11.91 Bulletin 91/48

(84) Designated Contracting States:
DE ES FR

(71) Applicant: SPLENDOR S.r.l.
Via Ticino, 68
I-28068 Galliate (Novara) (IT)

(72) Inventor: Ferrari, Milena
c/o SPLENDOR S.r.l., Via Ticino, 68
I-28068 Galliate (Novara) (IT)

(74) Representative: Cicogna, Franco
Ufficio Internazionale Brevetti Dott.Prof.
Franco Cicogna Via Visconti di Modrone, 14/A
I-20122 Milano (IT)

(54) Flexible seat cover for motor vehicle head-rest and seat assembly.

(57) A flexible seat cover comprises a cut and shaped fabric portion which directly defines a projecting portion for covering a headrest and is provided with a perimetrical restraining resilient band, and adapted to be fitted either to the front seats or to the rear seats of the motor vehicle.

FIG. 2

EP 0 458 757 A2

## BACKGROUND OF THE INVENTION

The present invention relates to a flexible seat cover for motor vehicle head-rest and seat assemblies.

There are already known flexible seat covers which are used for coating the front seats of motor vehicles to properly protect said seats.

These seat covers are made with a lot of different size, depending on the vehicle size, since the seat size vary, within given limit, depending on the class of the motor vehicle.

These prior art seat covers, however, are affected by some drawbacks relating to a proper arrangement of the covers on the individual seats, since, for fitting a cover to a seat, it is conventionally necessary to perform operations such as binding of cord elements, coupling of hook elements and the like which are usually provided for firmly restraining the covers.

## SUMMARY OF THE INVENTION

The aim of the present invention is to overcome the above mentioned drawback, by making a flexible cover for coating motor vehicle seats, which can be used on motor vehicles of any model and/or displacement.

Within the scope of the above mentioned aim, a main object of the present invention is to provide a flexible seat cover which can be fitted in a very simple and quick way to the individual seats of the motor vehicles.

Another object of the present invention is to provide such a flexible seat cover which can also advantageously operate as a protecting element for the original seat of any motor vehicles.

According to one aspect of the present invention, the above mentioned aim and objects, as well as yet other objects, which will become more apparent hereinafter, are achieved by a flexible seat cover, characterized in that said cover comprises a cut and shaped fabric portion which directly defines a projecting portion for covering a headrest and being provided with a resilient restraining band, said fabric portion being so designed and arranged that it can cover either the front or the rear seats of the motor vehicle.

## BRIEF DESCRIPTION OF THE DRAWINGS

Further characteristics and advantages of the flexible seat cover according to the present invention will become more apparent from the following detailed description of preferred embodiments thereof which are illustrated, by way of an indicative but not limitative example, in the figures of the accompanying drawings, where:

Figure 1 illustrates an exploded view of a flexible seat cover according to the invention provided for coating a front motor vehicle seat;

Figure 2 shows the seat cover arranged on the seat;

Figures 3 and 4 are respective rear perspective views showing the flexible cover and the seat covered thereby; and

Figure 5 illustrates a rear seat cover fitted to a rear seat of a motor vehicle.

## DESCRIPTION OF THE PREFERRED EMBODIMENT

With reference to the figures of the accompanying drawings, the flexible cover for covering motor vehicle seats in general, provided with heat-rest members, according to the invention, comprises a fabric portion, preferably made of a pure cotton, which is suitably cut and shaped and indicated overally at the reference number 1.

Also preferably, the mentioned fabric portion is provided with a diamond pattern quilted arrangement, and is so contoured as to cover, on the front portion and side portion, either a front seat 2 or a rear seat 3 of a motor vehicle.

More specifically, the mentioned fabric portion defines, directly on its top part, either one or two projecting portions or pockets 4, which can be fitted on corresponding headrest elements 5.

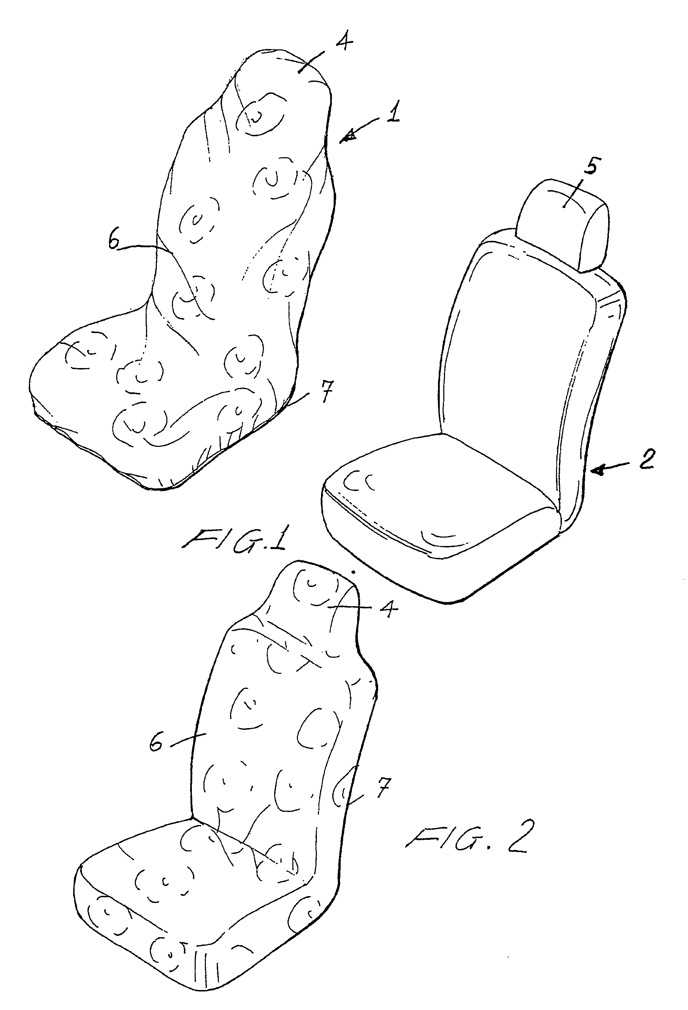

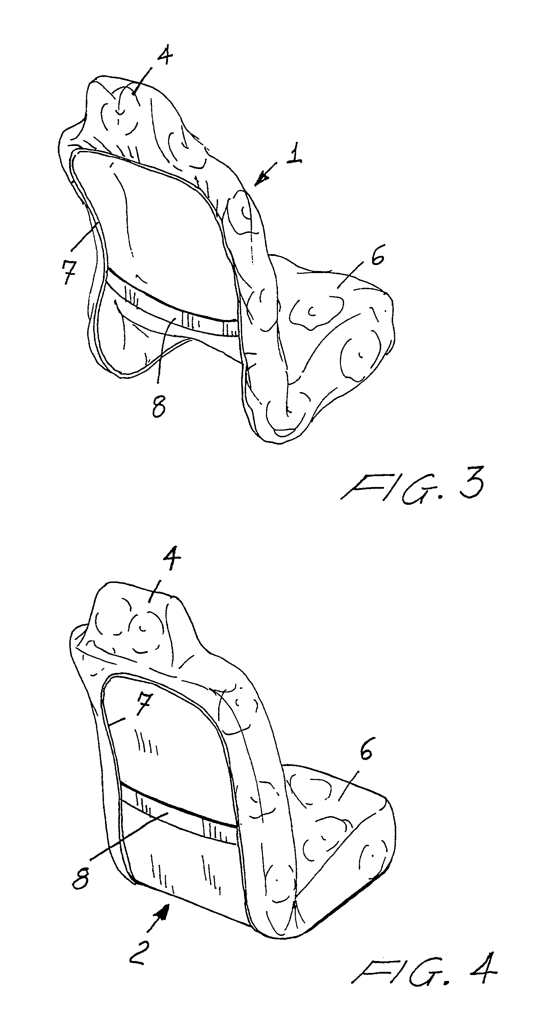

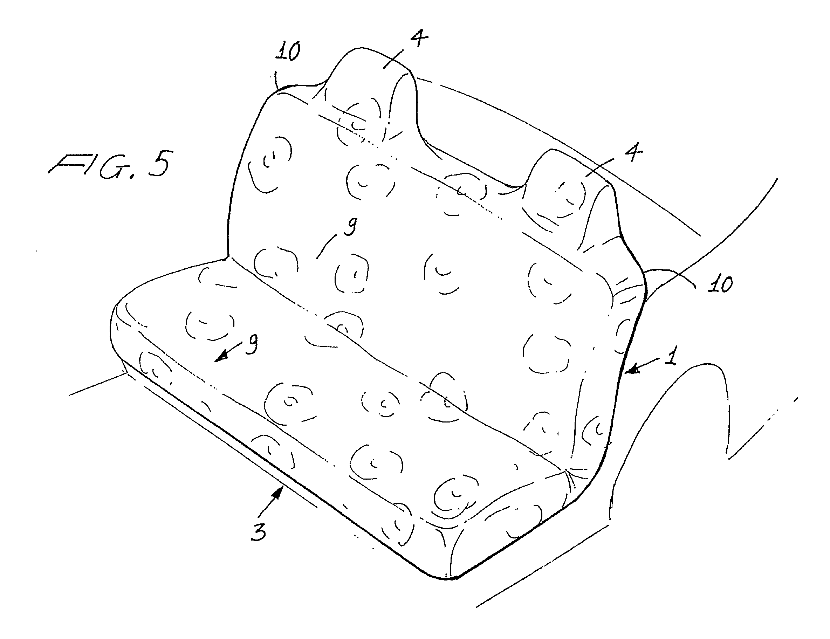

In figures 1 to 4 there is shown a flexible cover 6 which fully covers a front seat, being restrained on the latter by means of a perimetrical band of a resilient material, such as rubber 7, as well as by means of a single intermediate rear strip 8 also made of a resilient material.

There is moreover provided a larger size piece 9, in the form of a plaid, which can be fitted to a rear seat, as shown in figure 5, by means of two resilient material strips 10 affixed at the top side end portions of the seat.

In this connection it should be apparent that the pattern arrangement of the fabric forming the flexible cover can be any according to requirements.

While the invention has been disclosed and illustrated with reference to preferred embodiments thereof, it should be apparent that the disclosed embodiments are susceptible to several modifications and variations all of which will come within the spirit and scope of the appended claims.

## Claims

1. A flexible seat cover, characterized in that said cover comprises a cut and shaped fabric portion which directly defines a projecting portion for covering a headrest and being provided with a resilient restraining band, said fabric portion being so designed and arranged that it can cover either the front or the rear seats of a motor vehicle.

2. A flexible seat cover according to Claim 1, characterized in that said cover is made of a pure cotton fabric provided with a diamond element quilted arrangement.

3. A flexible seat cover according to Claims 1 and 2, characterized in that said cover is so designed and arranged as to fully cover a front seat thereon it is restrained by a perimetrical resilient rubber material band and a single intermediate rear strip also made of a resilient material.

4. A flexible seat cover according to the preceding Claims, characterized in that said cover is so designed and arranged that it can fully cover a rear seat, said cover being restrained on said rear seat by two resilient material strips affixed at the top side end portions thereof.

5. A flexible seat cover according to any preceding Claims, characterized in that the fabric forming said cover has either an even color, or geometric or fancy patterns on a different color background.

FIG.1

FIG. 2

FIG. 3

FIG. 4

FIG. 5

EP 0 458 757 A2